# EUROPEAN PATENT APPLICATION

(11) **EP 4 239 598 A1**
(43) Date of publication of application: **06.09.2023**
(21) Application number: 22159738.8
(22) Date of filing: 02.03.2022
(51) Int. Cl.: G06V 20/59, G06V 40/19, G06V 40/10, G06V 40/20, G06V 40/18, G06V 10/20

(54) **METHOD FOR DETERMINING AN ATTENTIVENESS OF A DRIVER OF AN AUTOMATED VEHICLE**

(71) Applicant: Bayerische Motoren Werke Aktiengesellschaft, 80809 München (DE)
(72) Inventor: Bilra, Manjeet Singh, 85457 Hörlkofen (Wörth) (DE); Abdelhameed, Mohamed-Saad, 85221 Dachau (DE)

(57) **Abstract**

Provided is a method for determining an attentiveness of a driver of an automated vehicle comprising a camera installed at rear-view mirror inside the automated vehicle such that a steering wheel of the automated vehicle and a driver seat of the automated vehicle are located in a field of view of the camera and a data processing unit connected to the camera. The method comprises acquiring image data using the camera, the acquired image data corresponding to the field of view of the camera, sending the acquired image data from the camera to the data processing unit, receiving the image data from the camera at the data processing unit, and determining the attentiveness of the driver at the data processing unit by determining if a hand of the driver is present on the steering wheel and by determining an eyelid opening and/or closing rate of at least one eye and/or a viewing direction of the driver based on the image data received from the camera.

## Description

The present invention is directed to a method for determining an attentiveness of a driver of an automated vehicle, and a data processing unit, e.g., a control unit, being configured to carry out the method at least partly. The data processing unit may be a part of a system additionally comprising a camera. An automated vehicle comprising the data processing device may be provided. Additionally or alternatively, a computer program may be provided, the computer program comprising instructions which, when the program is executed by a computer, e.g., the data processing unit, cause the computer to carry out the method at least partly. Additionally or alternatively, a computer-readable medium may be provided, the computer-readable medium comprising instructions which, when executed by a computer, cause the computer to carry out the method at least partly.

The background of the disclosure is to provide an approach for reliably determining a driver's attentiveness of an automated vehicle.

Depending on the automation level of the vehicle, such as an automobile, the driver has to monitor the automated driving carried out by the vehicle permanently or to some extent. Different approaches for monitoring the attentiveness of the driver are described in the prior art.

US 10 160 426 B2 is directed to a driver monitoring device. The driver monitoring device includes a detection unit that detects an unbalanced posture of a driver based on an image of a driver's seat of a vehicle captured by a camera; a determination unit that determines whether or not the unbalanced posture of the driver detected by the detection unit is a habitual posture of the driver; and a notification unit that notifies the driver of the unbalanced posture in different manners in accordance with whether the unbalanced posture determined is the habitual posture of the driver or the unbalanced posture determined is other than the habitual posture of the driver.

US 2021 323 473 A1 is directed to a vehicular interior rearview mirror assembly includes a mirror head adjustably attached at a mounting base configured to attach at an interior portion of a vehicle. A driver monitoring camera is accommodated by the mirror head so as to move in tandem with the mirror head when the mirror head is adjusted relative to the mounting base to adjust a driver's rearward view. A forward viewing camera is accommodated by the mounting base so as to have a forward field of view through the vehicle windshield. A processor is operable to process image data captured by the driver monitoring camera to determine (i) driver attentiveness, (ii) driver drowsiness and/or (iii) driver gaze direction. The processor adjusts processing of the image data captured by the driver monitoring camera to accommodate adjustment of the mirror head when the driver adjusts the mirror head to adjust his or her rearward view.

Other approaches detect if the hand(s) of the driver are currently on the driving wheel.

In light of this prior art, the object of the present invention is to provide at least an alternative approach for determining the attentiveness of a driver of an automated vehicle

The object is solved by the features of the independent claim. The dependent claims have preferred further embodiments of the invention as their subject matter.

More specifically, the object is solved by a method for determining an attentiveness of a driver of an automated vehicle.

The method may be carried out during a state in which the vehicle is an automated driving mode, wherein at least some or all the driving tasks are accomplished automated by the vehicle in the automated driving mode. The attentiveness of the driver may be an assumed ability of the driver to take over control of at least one driving function of the automated vehicle during the vehicle is an automated driving mode. The ability of the driver to take over control of the at least one driving function may be determined with respect to the driver's ability to take over control after being notified by the vehicle to do so and/or without being notified by the vehicle but because the current driving situation requires it (i.e., because a driving situation occurs in which the at least one automated driving function does not act appropriately, e.g., the vehicle is heading towards an obstacle without breaking and/or changing its driving direction to avoid the obstacle).

The attentiveness is per se a subjective criterion but, as done in the present case, may be measured based on predefined criteria and thus may be objectified. These criteria are defined in more detail below. These criteria allow to determine for example an attentiveness value on a predefined scale, wherein the determined attentiveness value may be compared to a predefined threshold and, if the determined attentiveness value is below the threshold, the method may comprise deactivating or block activating of automated driving functions of the automated vehicle. Additionally or alternatively, the driver may be notified by the vehicle to take over control (i.e., so-called Take-over-Request (TOR)) to carry out some or all driving functions on its own, optionally within a certain timespan after being notified by the vehicle to do so. Thus, the output of the method may be a control signal controlling an automated driving of the vehicle based on the determined attentiveness of the driver.

The automated vehicle comprises a camera installed at a rear-view mirror inside the vehicle such that a steering wheel of the automated vehicle and a driver seat of the automated vehicle are located in a field of view of the camera and a data processing unit connected to the camera.

The rear-view mirror (or rearview mirror) is normally a flat mirror in automobiles and other vehicles, designed to allow the driver to see rearward through the vehicle's rear window (rear windshield). In cars/automobiles, the rear-view mirror is usually affixed to the top of the windshield, e.g., on a double-swivel mount, allowing it to be adjusted to suit the height and viewing angle of any driver and to swing harmlessly out of the way if impacted by a vehicle occupant in a collision. The rear-view mirror may be augmented by one or more side-view mirrors, which serve as the only rear-vision mirrors on trucks, motorcycles and bicycles. That is, the rear-view mirror may be mounted inside the vehicle, i.e., inside a passenger space of the vehicle, such that the driver of the vehicle is able to see rearward through the vehicle's rear window when looking in the rear-view mirror and sitting on the driver's seat. The steering wheel may be mounted in front of the driver's seat and may be reachable by the driver's hands when sitting on the driver's seat. The steering wheel may comprise a rim to be touched by the driver during driving the vehicle. The steering wheel may allow the driver to adjust a driving direction of the vehicle by turning the steering wheel. Therefore, the steering wheel may be attached to an upper end of a steering wheel column, to which several control levers or control satellites may be attached on the right and/or left. The steering wheel may have substantially the form of a wheel, but it may also have other forms/shape like for example an oval form.

The above described parts of the vehicle, i.e., at least the steering wheel and the driver's seat, are in the field of view (FOV) of the camera. The field of view is that part of the world that is visible through the camera at a particular position and orientation in space; objects inside the FOV when the picture is taken are recorded in the photograph, i.e., in the image data. Since the FOV of the camera includes the driver's seat, the driver is also in the FOV of the camera when sitting on the driver's seat. The same is true for the hand(s) of the driver and the steering wheel.

The method comprises acquiring image data using the camera, the acquired image data corresponding to the field of view of the camera, sending the acquired image data from the camera to the data processing unit, receiving the image data from the camera at the data processing unit, and determining the attentiveness of the driver at the data processing unit by determining if a hand of the driver is present on the steering wheel and by determining an eyelid opening and/or closing rate of at least one eye and/or a viewing direction of the driver based on the image data received from the camera.

That the acquired image data correspond to the field of view of the camera means that the steering wheel, especially an upper part thereof where the driver's hands should be located, as well as the driver's seat, especially the upper part thereof where the driver's face should be located, are recorded by the camera and are thus included in the image data.

The determination carried out at the data processing unit may use on or more algorithm. Therefore, the method may be a computer implemented method where at least some or all of the steps are carried out by a computer. The algorithm may include an object detection algorithm designed to detect the driver's hand(s) in the image data, the steering wheel and the position of the driver's hand(s) with respect to the steering wheel to determine if the driver's hand(s) are placed on the steering wheel, i.e., are in touch with the steering wheel. Moreover, using an object detection algorithm the eyelid opening and/or closing rate may be determined. The eyelid opening and/or closing rate may also be called blink pattern. Closing means that the eyelids move together to close the eye and opening means that the eyelids move away from each other to open the eye. The rate depends on the duration it takes to open or close the eye. The rate may be the frequency, i.e., opening and/or closing operations per predefined timespan, but may also be the (optionally average) duration of the opening and/or closing operations per se.

The viewing direction of the driver may be defined as the assumed direction in which the driver looks at the time the image data was captured.

The data processing unit may determine the viewing direction of the driver by determining a position of a nose and/or a head of the driver based on the image data received from the camera.

However, additionally or alternatively, the data processing unit may determine the viewing direction of the driver (directly) by determining a position of the pupil(s) of the driver.

The data processing unit may determine the attentiveness of the driver by determining if only one or both hands of the driver are present on the steering wheel based on the image data received from the camera.

The camera may be installed the at rear-view mirror inside the vehicle such that a front passenger seat and/or at least one rear passenger seat are located in the field of view of the camera. The method may comprise determining the attentiveness of the driver at the data processing unit by determining a presence, and optionally a movement, of at least one passenger located on the front passenger seat and/or the at least one rear passenger seat.

The method may further comprise determining the attentiveness of the driver at the data processing unit by determining if the driver uses a handheld device and/or a human-machine-interface of the vehicle based on the image data received from the camera.

The automated vehicle may further comprise a camera setup installed at a lateral side, optionally at both lateral sides, of the vehicle such that an environment of the automated vehicle located on a left and/or a right side of the vehicle and a driver seat of the automated vehicle are located in a field of view of the camera setup.

The method may further comprise acquiring image data using the camera setup, the acquired image data corresponding to the field of view of the camera setup, sending the acquired image data from the camera setup to the data processing unit, receiving the image data from the camera setup at the data processing unit, and determining the attentiveness of the driver at the data processing unit by determining an eyelid opening and/or closing rate of at least one eye and/or a viewing direction of the driver based on the image data received from the camera setup.

The data processing unit may determine the viewing direction of the driver by determining a position of a nose and/or a head of the driver based on the image data received from the camera setup.

The method may further comprise performing a plausibility check of the eyelid opening and/or closing rate of at least one eye and/or the viewing direction of the driver determined based on the image data received from the camera using the eyelid opening and/or closing rate of the at least one eye and/or the viewing direction of the driver determined based on the image data received from the camera setup.

The automated vehicle may further comprise a capacitive sensor installed at the steering wheel of the automated vehicle, wherein the capacitive sensor is configured to detect and output an information if the hand of the driver is present on the steering wheel.

The method may comprise acquiring information if the hand of the driver is present on the steering wheel using the capacitive sensor, sending the acquired information from the capacitive sensor to the data processing unit, receiving the information from the capacitive sensor at the data processing unit, and determining the attentiveness of the driver at the data processing unit based on the information received from the capacitive sensor.

The data processing unit may determine the attentiveness of the driver at the data processing unit by determining if only one or both hands of the driver are present on the steering wheel based on the information received from the capacitive sensor.

The method may further comprise performing a plausibility check, at the data processing unit, of a result of the determination if the hand of the driver is present on the steering wheel determined based on the image data received from the camera based on the information received from the capacitive sensor.

The above described may be summarized in other words and with respect to one solely exemplary implementation thereof as follows.

A setup comprising one or more cameras is used, wherein at least one of the cameras (it could be a fisheye camera) is mounted at rear-view mirror assembly inside the vehicle.

The at least one camera installed at the rear-view mirror assembly may detect whether the driver's hands are present on the steering wheel or not. It may also detect if the driver is holding the steering wheel with one hand or both hands.

The information about the hands on the wheel from camera setup may be used with a capacitive sensor installed on the steering wheel and a steering wheel torque sensor to ensure that the driver is attentive and could take over the vehicle in case of any emergency.

The camera will also detect the driver's attentiveness, i.e., the driver's state, as explained in the following.

The camera may additionally detect the direction towards which the nose of the driver points and/or a head position and/or orientation of the driver's head to determine if the driver is looking forward while driving.

The camera may also detect if the driver is using his phone or any other device such as a tablet, a laptop and/or an HMI of the vehicle and is thus not paying attention to the road.

The camera may additionally or alternatively detect co-passenger(s) and any other people or pets on rear and/or front seats of the vehicle.

The system may also comprise an additional camera setup, optionally instead of external mirrors. This additional camera setup may not only monitor and provide information regarding the traffic from left and right side of the vehicle, but it may also detect if the driver is looking either on left or right side instead of focusing on the situation in front of the vehicle.

This additional information may be used with the driver's state where the driver's eyes and eyelids opening/closing rate is monitored together with additional inputs for driver's head position. All this information may be combined for reliable determination of the driver's attentiveness.

All the above inputs may be provided to a state machine where each input is checked for its given range with end-to-end (E2E) protection. The state machine may be developed according to ASIL (Autonomous Safety Integrity Level) and may perform a plausibility check using redundant input information to provide a valid output regarding whether the driver is attentive optionally including if the driver's hands are reliably detected on the steering wheel.

The output could be provided to an internal electronic control unit (ECU) which may provide a visual (textual and/or symbolic), haptic and/or auditive or warning information to the driver in case the driver is not attentive, especially does not have his hand(s) on the steering wheel.

Furthermore, a data processing unit may be provided. The data processing unit comprises means for carrying out the above-described method at least partly.

The data processing unit can be or comprise a control unit, optionally an electronic control unit (ECU), for a vehicle. The (electronic) control unit can be an intelligent processor-controlled unit that can communicate with other modules, optionally via a central gateway (CGW). The control unit can form part of the vehicle's onboard network via fieldbuses such as the CAN bus, LIN bus, MOST bus and/or FlexRay or via automotive Ethernet, optionally together with a telematics control unit. The electronic control unit may be configured to control functions relevant to a driving behavior of the vehicle, such as an engine control system, a power transmission, a braking system and/or a tire pressure control system. In addition, some or all driver assistance systems such as parking assistant, adaptive cruise control, lane departure warning, lane change assistant, traffic sign recognition, light signal recognition, approach assistant, night vision assistant, intersection assistant, and/or many others may be controlled by the control unit.

Moreover, the description given above with respect to the method applies mutatis mutandis to the data processing unit and vice versa.

Furthermore, an automated vehicle comprising the above-described data processing unit may be provided.

The automated vehicle may be an automobile. The automated vehicle can be designed to take over lateral and/or longitudinal guidance at least partially and/or temporarily during automated driving of the automated vehicle. The automated driving may be controlled by the data processing unit at least partly and/or temporarily.

The automated driving may be such that the driving of the vehicle is (largely) autonomous.

The vehicle may be a vehicle of autonomy level 1, i.e., have certain driver assistance systems that support the driver in vehicle operation, for example adaptive cruise control (ACC).

The vehicle can be a vehicle of autonomy level 2, i.e., be partially automated in such a way that functions such as automatic parking, lane keeping or lateral guidance, general longitudinal guidance, acceleration and/or braking are performed by driver assistance systems.

The vehicle may be an autonomy level 3 vehicle, i.e., automated in such a conditional manner that the driver does not need to continuously monitor the system vehicle. The motor vehicle autonomously performs functions such as triggering the turn signal, changing lanes, and/or lane keeping. The driver can attend to other matters but is prompted by the system to take over control within a warning time if needed.

The vehicle may be an autonomy level 4 motor vehicle, i.e., so highly automated that the driving of the vehicle is permanently taken over by the system vehicle. If the driving tasks are no longer handled by the system, the driver may be requested to take over control.

The vehicle may be an autonomy level 5 vehicle, i.e., so fully automated that the driver is not required to complete the driving task. No human intervention is required other than setting the destination and starting the system. The vehicle can operate without a steering wheel or pedals.

Moreover, the description given above with respect to the method and the data processing unit applies mutatis mutandis to the vehicle and vice versa.

Furthermore, a computer program may be provided, the computer program comprising instructions which, when the program is executed by a computer, cause the computer to carry out the above-described method at least partly.

The computer program may comprise any program code, in particular a code suitable for control systems of vehicles. The description given above with respect to the method, the data processing system and the vehicle applies mutatis mutandis to the computer program and vice versa.

Moreover, the description given above with respect to the method, the data processing unit and the vehicle applies mutatis mutandis to the computer program and vice versa.

Furthermore, computer-readable medium may be provided, the computer-readable medium comprising instructions which, when executed by a computer, cause the computer to carry out the above-described method at least partly.

The computer-readable medium may be any digital data storage device, such as a USB flash drive, a hard disk, a CD-ROM, an SD card, or an SSD card. The above-described computer program may be stored on the computer-readable medium. However, the computer program does not necessarily have to be stored on such a computer-readable medium but can also be obtained via the Internet.

Moreover, the description given above with respect to the method, the data processing unit, the vehicle, and the computer program applies mutatis mutandis to the computer-readable medium and vice versa.

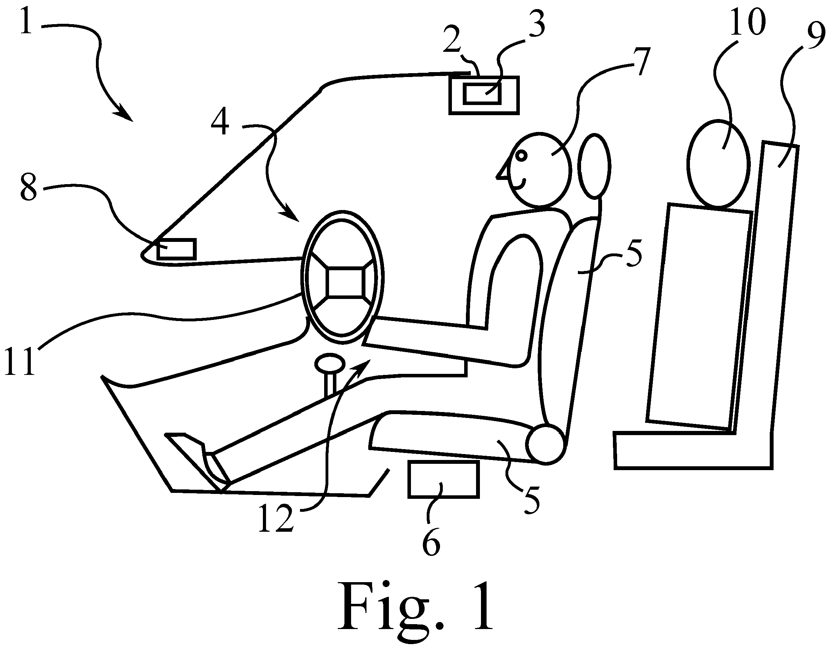

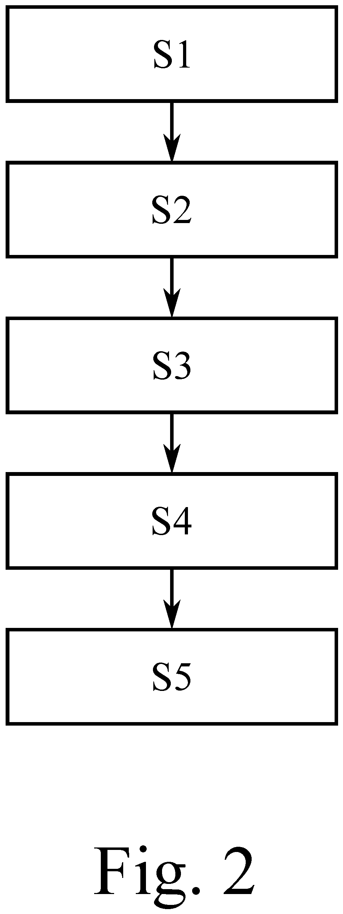

An embodiment is described with reference to figures 1 and 2 below.
- Fig. 1: schematically shows an automated vehicle comprising a system configured to carry out a method for determining an attentiveness of a driver of the automated vehicle, and
- Fig. 2: schematically shows a flowchart of the method.

In the following, the embodiment is described with reference to figures 1 and 2, wherein the same references signs are used for the same objects throughout the figures, and wherein the embodiment is just one specific example for implementing the disclosure and thus not intended to limit the scope of the disclosure as defined by the claims.

In figure 1 a side view of an interior of an automated vehicle 1 is shown, the automated vehicle 1 comprising a fisheye camera 3 installed at a rear-view mirror 2 inside the vehicle 1 such that a steering wheel 4 of the automated vehicle 1 and a driver seat 5, a (not shown) front passenger seat and the rear passenger seats 9 (only one is shown in figure 1) are located in a field of view of the fisheye camera 3. The automated vehicle 1 further comprises two side cameras 8 (only one shown in figure 1) which function as side mirrors and are installed at lateral sides (left and right) of the vehicle 1 such that an environment of the automated vehicle1 located on a left and a right side (outside) of the vehicle 1 is located in a field of view of the side cameras 8. Moreover, the driver seat 5 of the automated vehicle 1 is located at least in the field of view of the side camera 8 installed on the same side of the vehicle 1 as the driver seat 5. The automated vehicle 1 further comprises a capacitive sensor 11 installed at the steering wheel 4 of the automated vehicle 1, wherein the capacitive sensor 11 is configured to detect and output an information if a hand 12 of the driver 7 is present on the steering wheel 4.

The automated vehicle 1 further comprises a data processing unit 6 connected to the fisheye camera 3 and the side cameras 8. The fisheye camera 3, the side (view) cameras 8 and the data processing unit 6 are part of a system for carrying out a method for determining an attentiveness of the driver 7 of the automated vehicle 1.

As can be gathered from figure 2, the method comprises substantially five steps S1-S5.

In a first step S1 of the method, image data is acquired using the fisheye camera 3 and the side view cameras 8, wherein the acquired image data corresponds to the respective field of view of the cameras 3, 8,, and also information if the hand 12 of the driver 7 is present on the steering wheel 4 (or not) is acquired using the capacitive sensor 11.

In a second step S2 of the method, the acquired image data is sent from the cameras 3, 8 to the data processing unit 6 and the acquired information from the capacitive sensor 11 is sent from the capacitive sensor 11 to the data processing unit 6.

In a third step S3 of the method, the image data from the cameras 3, 8 and the information from the capacitive sensor 11 is received at the data processing unit 6, respectively.

In a fourth step S4 of the method, the attentiveness of the driver 7 is determined based on the image data received from the cameras 3, 8 and based on the information received from the capacitive sensor 11. This will be described in detail below.

At the data processing unit 6 it is determined if the hands 12 of the driver 7 is present on the steering wheel 4 based on the image data received from the fisheye camera 3 and based on the information received from the capacitive sensor 11, respectively and separately. In the present case, determining if the hands 12 of the driver 7 are present on the steering wheel 4 may comprise determining if only one or both hands 12 of the driver 7 are present on the steering wheel 4 based on the image data received from the fisheye camera 3 and the information received from the capacitive sensor 11. That is, using an object detection algorithm configured to detect the steering wheel 4 and the hands 12 of the driver 7, it is determined if the hands 12 of the driver 7 are present on the steering wheel 4. The capacitive sensor 11 is a sensor which operates on the basis of a change in an electrical capacitance of a single capacitor or a capacitor system installed at, preferably in, the steering wheel 4. The capacitive sensor 11 may output the capacity or change in capacity to the data processing unit 6 allowing the data processing unit 6 to determine if the hands 12 of the driver 7 are present on the steering wheel or not, or may directly output the information if the hands 12 of the driver 7 are present on the steering wheel or not. Furthermore, a plausibility check is performed at the data processing unit 6 where the result gained using the image data of the fisheye camera 3 and the result gained using the information output by the capacitive sensor 11 are compared to each other and, if the results are the same, the results are qualified as plausible.

At the data processing unit 6 also an eyelid opening and/or closing rate of at least one eye and/or a viewing direction of the driver 7 is determined based on the image data received from the fisheye camera 3 and based on the image data received from the side cameras 8, respectively and separately. The data processing unit determines the viewing direction of the driver 7 based on a position of a nose and/or a head of the driver 7 using the respective image data received from the cameras 3, 8. Furthermore a plausibility check is performed at the data processing unit 6 where the eyelid opening and/or closing rate of the at least one eye and/or the viewing direction of the driver 7 determined based on the image data received from the fisheye camera 3 and the eyelid opening and/or closing rate of the at least one eye and/or the viewing direction of the driver 7 determined based on the image data received from the side cameras 8 are compared to each other. If the results determined using the image data from the fisheye camera 3 and the result determined using the image data from the side cameras 8 are the same, these results are qualified as plausible.

The method further comprises determining a presence, and optionally a movement, of at least one passenger 10 located on the front passenger seat and/or the at least one rear passenger seat 9 as well as determining if the driver 7 uses a handheld device and/or a human-machine-interface of the automated vehicle 1 based on the image data received from the fisheye camera 3 and the side cameras 8. Furthermore, a plausibility check is performed at the data processing unit 6 where the results of the fisheye camera 3 and the result of the side view cameras 8 are compared to each other and, if the results are the same, the results are qualified as plausible.

In the context of (highly) automated driving, qualifying detected properties, especially with ASIL integrity, is very important.

ASIL is the Automotive Safety Integrity Level which is a risk classification scheme defined by the ISO 26262 - Functional Safety for Road Vehicles standard. This is an adaptation of the Safety Integrity Level (SIL) used in IEC 61508 for the automotive industry. This classification helps defining the safety requirements necessary to be in line with the ISO 26262 standard. The ASIL is established by performing a risk analysis of a potential hazard by looking at the Severity, Exposure and Controllability of the vehicle operating scenario. The safety goal for that hazard in turn carries the ASIL requirements.

There are four ASILs identified by the standard: ASIL A, ASIL B, ASIL C, ASIL D. ASIL D dictates the highest integrity requirements on the product and ASIL A the lowest. Hazards that are identified as QM do not dictate any safety requirements.

All the information that are qualified as plausible are used by the data processing unit 6 to determine the attentiveness of the driver 7, wherein the attentiveness is measured on a predefined scale, i.e., an attentiveness value on the predefined scale is determined. So for example, having both hands 12 on the steering wheel 4 may lead to a higher attentiveness value than having only one hand 12 at the steering wheel 4 and so on.

In a fifth step S5 of the method carried out by the data processing unit 6, the determined attentiveness value is compared to a threshold and if the determined attentiveness value is below the threshold, the data processing unit 6 outputs a control signal to the automated vehicle 1 for deactivating certain or all automated driving functions.

### Reference signs

- 1: automated vehicle
- 2: rear-view mirror
- 3: fisheye camera
- 4: steering wheel
- 5: front/driver seat
- 6: data processing unit
- 7: driver
- 8: side (view) cameras
- 9: rear passenger seat
- 10: passenger on rear passenger seat
- 11: capacitive sensor
- 12: hand(s) of driver
- S1 - S5: steps of the method

## Claims

1. Method for determining an attentiveness of a driver (7) of an automated vehicle (1), wherein the automated vehicle comprises:
- a camera (3) installed at a rear-view mirror (2) inside the automated vehicle (1) such that a steering wheel (4) of the automated vehicle (1) and a driver seat (5) of the automated vehicle (1) are located in a field of view of the camera (3), and
- a data processing unit (6) connected to the camera (3),
wherein the method comprises:
- acquiring image data using the camera (3), the acquired image data corresponding to the field of view of the camera (3),
- sending the acquired image data from the camera (3) to the data processing unit (6),
- receiving the image data from the camera (3) at the data processing unit (6), and
- determining the attentiveness of the driver (7) at the data processing unit (6) by determining if a hand (12) of the driver (7) is present on the steering wheel (4) and by determining an eyelid opening and/or closing rate of at least one eye and/or a viewing direction of the driver (7) based on the image data received from the camera (3).

2. Method according to claim 1, wherein the data processing unit (6) determines the viewing direction of the driver (7) by determining a position of a nose and/or a head of the driver (7) based on the image data received from the camera (3).

3. Method according to claim 1 or 2, wherein the data processing unit (6) determines the attentiveness of the driver (7) at the data processing unit (6) by determining if only one or both hands (12) of the driver (7) are present on the steering wheel (4) based on the image data received from the camera (3).

4. Method according to any of claims 1 to 3, wherein the camera (3) is installed at the rear-view mirror (2) inside the automated vehicle (1) such that a front passenger seat and/or at least one rear passenger seat (9) are located in the field of view of the camera (3), wherein the method comprises:
- determining the attentiveness of the driver (7) at the data processing unit (6) by determining a presence, and optionally a movement, of at least one passenger (10) located on the front passenger seat and/or the at least one rear passenger seat (11).

5. Method according to any of claims 1 to 4, wherein the method further comprises determining the attentiveness of the driver (7) at the data processing unit (6) by determining if the driver (7) uses a handheld device and/or a human-machine-interface of the automated vehicle (1) based on the image data received from the camera (3).

6. Method according to any of claims 1 to 5, wherein the automated vehicle (1) further comprises a camera setup (8) installed at lateral sides of the automated vehicle (1) such that an environment of the automated vehicle (1) located on a left and/or a right side of the automated vehicle (1) and the driver seat (5) of the automated vehicle (1) are located in a field of view of the camera setup (8), wherein the method further comprises:
- acquiring image data using the camera setup (8), the acquired image data corresponding to the field of view of the camera setup (8),
- sending the acquired image data from the camera setup (8) to the data processing unit (6),
- receiving the image data from the camera setup (8) at the data processing unit (6), and
- determining the attentiveness of the driver (7) at the data processing unit (6) by determining an eyelid opening and/or closing rate of at least one eye and/or a viewing direction of the driver (7) based on the image data received from the camera setup (8).

7. Method according to claim 6, wherein the data processing unit (6) determines the viewing direction of the driver (7) by determining a position of a nose and/or a head of the driver (7) based on the image data received from the camera setup (8).

8. Method according to claim 6 or 7, wherein the method further comprises performing a plausibility check of the eyelid opening and/or closing rate of at least one eye and/or the viewing direction of the driver (7) determined based on the image data received from the camera (3) using the eyelid opening and/or closing rate of at least one eye and/or the viewing direction of the driver (7) determined based on the image data received from the camera setup (8).

9. Method according to any of claims 1 to 8, wherein the automated vehicle (1) further comprises a capacitive sensor (11) installed at the steering wheel (4) of the automated vehicle (1), wherein the capacitive sensor (11) is configured to detect and output an information if the hand (12) of the driver (7) is present on the steering wheel (4), wherein the method comprises
- acquiring information if the hand (12) of the driver (7) is present on the steering wheel (4) using the capacitive sensor (11),
- sending the acquired information from the capacitive sensor (11) to the data processing unit (6),
- receiving the information from the capacitive sensor (11) at the data processing unit (6), and
- determining the attentiveness of the driver (7) at the data processing unit (6) based on the information received from the capacitive sensor (11).

10. Method according to claim 9, wherein the data processing unit (6) determines the attentiveness of the driver (7) at the data processing unit (6) by determining if only one or both hands (12) of the driver (7) are present on the steering wheel (4) based on the information received from the capacitive sensor (11).

11. Method according to claim 9 or 10, wherein the method further comprises performing, at the data processing unit (6), a plausibility check of a result of the determination if the hand (12) of the driver (7) is present on the steering wheel (4) determined based on the image data received from the camera (3) using the information received from the capacitive sensor (11).

12. Data processing unit (6) for an automated vehicle (1),
- wherein the data processing unit (6) is connectable to a camera (3), wherein the camera (3) is configured to be installed at rear-view mirror inside (2) the automated vehicle (1) such that a steering wheel (4) of the automated vehicle (1) and a driver seat (5) of the automated vehicle (1) are located in a field of view of the camera (3), and wherein the camera (3) is configured to acquire image data corresponding to said field of view and send the acquired image data to the data processing unit (6), and
- wherein the data processing unit (6) is configured to receive the image data from the camera (3) and to determine an attentiveness of a driver (7) of the automated vehicle (1) by determining if a hand (12) of the driver (7) is present on the steering wheel (4) and by determining an eyelid opening and/or closing rate of at least one eye and/or a viewing direction of the driver (7) based on the image data received from the camera (3).

13. System for determining an attentiveness of a driver (7) of an automated vehicle (1), the system comprising:
- a camera (3) configured to be installed at rear-view mirror (2) inside the automated vehicle (1) such that a steering wheel (4) of the automated vehicle (1) and a driver seat (5) of the automated vehicle (1) are located in a field of view of the camera (3), and wherein the camera (3) is configured to acquire image data corresponding to said field of view and send the acquired image data to a data processing unit (6), and
- the data processing unit (6) which is configured to receive the image data from the camera (3) and to determine an attentiveness of the driver (7) of the automated vehicle (1) by determining if a hand (12) of the driver (7) is present on the steering wheel (4) and by determining an eyelid opening and/or closing rate of at least one eye and/or a viewing direction of the driver (7) based on the image data received from the camera (3).

14. Automated vehicle (1) comprising the system according to claim 13.

15. Computer program and/or computer-readable medium comprising instructions which, when the instructions are executed by a computer, cause the computer to determine an attentiveness of a driver (7) of an automated vehicle (1) by determining if a hand (12) of the driver (7) is present on a steering wheel (4) of the automated vehicle (1) and by determining an eyelid opening and/or closing rate of at least one eye and/or a viewing direction of the driver (7) based on image data acquired by a camera (3), wherein the camera (3) is configured to be installed at a rear-view mirror (2) inside the vehicle (1) such that the steering wheel (4) of the automated vehicle (1) and a driver seat (5) of the automated vehicle (1) are located in a field of view of the camera (3).
